# EUROPÄISCHE PATENTSCHRIFT

(11) **EP 0 685 646 B1**
(45) Veröffentlichungstag und Bekanntmachung des Hinweises auf die Patenterteilung: **11.06.1997**
(21) Anmeldenummer: 95111191.3
(22) Anmeldetag: 07.10.1991
(51) Int. Cl.: F02M 63/06, F02M 51/04, F02M 55/02

(54) **Kraftstoff-Einspritzvorrichtung für Brennkraftmaschinen**
Fuel injection device for internal combustion engines
Dispositif d'injection de combustible pour moteurs à combustion interne

(30) Priorität: 26.02.1991 DE 4106015
(43) Veröffentlichungstag der Anmeldung: 06.12.1995
(62) Teilanmeldung aus: 91917579.4
(73) Patentinhaber: Ficht GmbH & Co. KG, 85610 Kirchseeon (DE)
(72) Erfinder: Heimberg, Wolfgang, Dr., D-8017 Ebersberg (DE)
(74) Vertreter: Patentanwälte Dr. Solf & Zapf

(56) Entgegenhaltungen:
- EP-A- 0 174 261
- DE-C- 598 918

## Beschreibung

Die Erfindung betrifft eine Vorrichtung zum Einspritzen von Kraftstoff für Brennkraftmaschinen der im Oberbegriff des Anspruchs 1 angegebenen Art.

Kraftstoff-Einspritzvorrichtungen für Brennkraftmaschinen sind weit verbreitet und haben sich in der Praxis in unterschiedlichen Bauformen durchgesetzt, denen jedoch verschiedene Mängel anhaften.

Für die Direkteinspritzung von Dieselkraftstoff oder auch die Einspritzung im sog. Vorkammerverfahren sind Pumpen gebräuchlich, die nockenbetätigte Plunger bzw. Kolben aufweisen, wobei die Nocken auf einer von der Motorkurbelwelle direkt angetriebenen Nockenwelle angeordnet sind. Die Mengenverstellung wird über in den Kolben bzw. Plungern eingearbeitete Steuerkanten bewerkstelligt. Pumpen dieser Baurat haben einen hohen Betriebsleistungsbedarf über den gesamten Kurbelweg der Brennkraftmaschine bzw. des Dieselmotors hinweg und sind insbesondere einer elektronischen Steuerung nicht zugänglich.

Demgegenüber ist eine Einspritzvorrichtung der eingangs genannten Art einer elektronischen Steuerung grundsätzlich zugänglich. Der Aufbau einer derartigen bekannten Einspritzvorrichtung soll nachfolgend anhand der Fig. 1 im Zusammenhang mit den Fig. 2 und 3 näher beschrieben werden, die typische Druckverläufe der Druckstoßeinrichtung zeigt, über die der Einspritzdüse Kraftstoff zugeführt wird.

Aus einem Kraftstoffbehälter 1 wird mittels einer Kraftstoffpumpe 2 mit einem Druck von etwa 3 bis 10 bar Kraftstoff in eine Rohrleitung 5 eingespeist, in welcher ein Druckregler 3 und eine Dämpfungseinrichtung 4 angeordnet sind. Am Ende der Leitung 5 ist ein beispielsweise elektromagnetisch betätigtes Absperrventil 6 vorgesehen, über welches im geöffneten Zustand von der Pumpe 2 beschleunigter Kraftstoff in den Vorratsbehälter 1 zurückgeführt wird. Durch schlagartiges Schließen des Sperrventils 6 wird die kinetische Energie des in der Leitung 5 sowie in der Leitung 7 strömenden Kraftstoffes in Druckenergie umgewandelt. Die Größe des dabei entstehenden Druckstoßes beträgt etwa 20 bis 80 bar, also etwa das 10fache des durch die Pumpe 2 erzeugten Strömungsdruckes in der Leitung 5, die auch Schwungleitung genannt wird. Der so am Absperrventil 6 entstehende Druckstoß wird zum Abspritzen des auf diese Weise beschleunigten Kraftstoffes über eine Einspritzdüse 10 genutzt, die über eine Druckleitung 9 an das Ventil 6 und damit an die Leitung 5 angeschlossen ist.

Durch die Verwendung eines elektromagnetisch betätigbaren Absperrventils ist diese bekannte Einspritzvorrichtung elektronisch steuerbar, und zwar mittels einer an das Ventil 6 angeschlossenen elektronischen Steuereinheit 8.

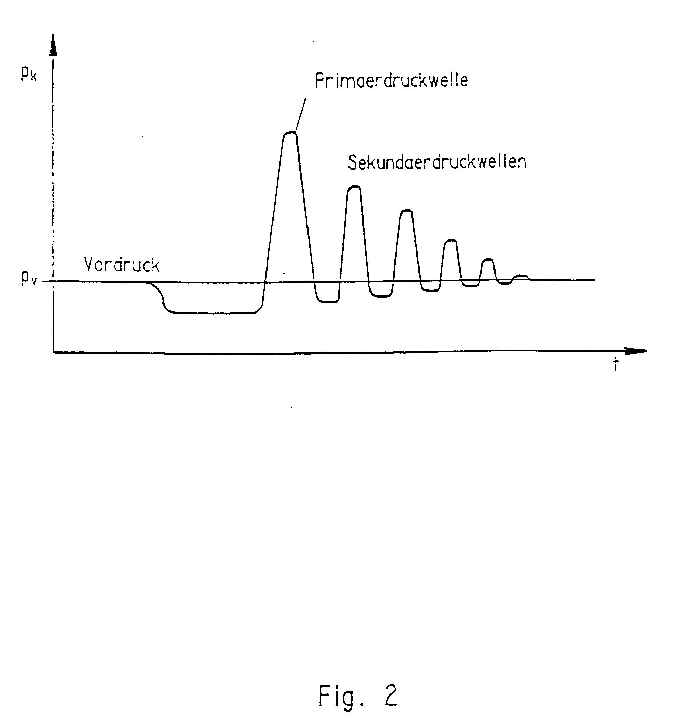

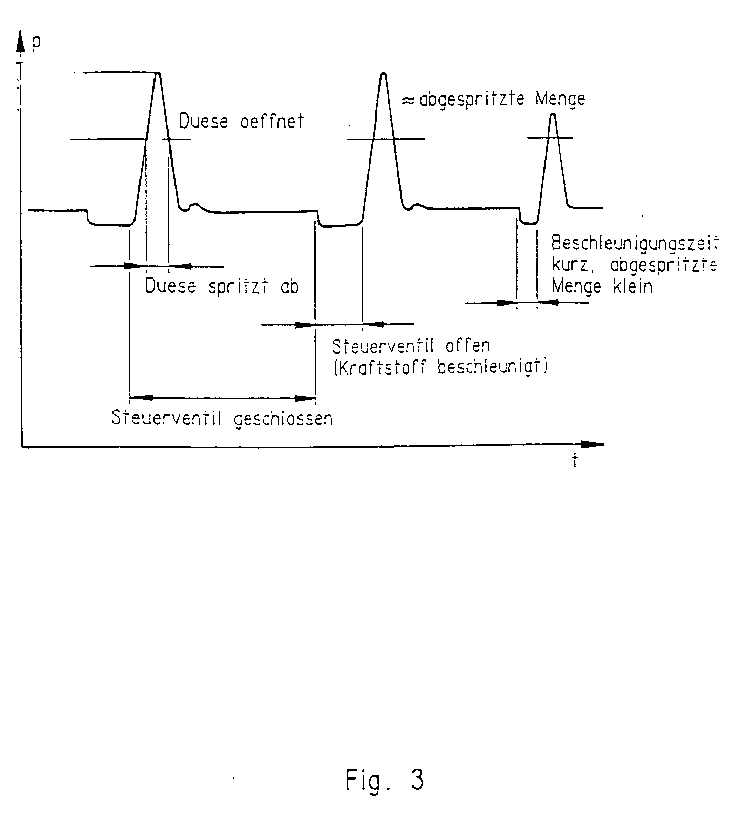

Der beim schlagartigen Schließen des Absperrventils 6 in der Schwungleitung 5 erzeugte Druckstoß wandert in Form einer Druckwelle mit Schallgeschwindigkeit durch die Leitungen 5, 7 und 9, wobei die Energie der Druckwelle in den Leitungen 5 und 9 zum Abspritzen von Kraftstoff über die Düse 10 zur Verfügung steht. Die sich in der Schwungleitung 5 ausbreitende Druckwelle wird am Ausgang der Pumpe 2 reflektiert und wandert zum Absperrventil 6 zurück. Die Zeitdauer der Phase dieses direkten Druckstoßes entspricht der Laufdauer der Druckwelle durch die Schwungleitung 5 und bewirkt die Druckdauer an der Einspritzdüse 10. Nach der Phase dieses direkten Druckstoßes verbleibt in der Schwungleitung 5 eine Restdruckenergie, die in der Schwungleitung hin- und herläuft. Fig. 2 zeigt einen typischen zeitlichen Verlauf des Druckstoßes in der Schwungleitung bei Abwesenheit der Dämpfungseinrichtung 4 in der Leitung 5. Dieser Druckverlauf ist durch eine Primärdruckwelle maximaler Energie und nachfolgende Sekundärdruckwellen mit zunehmend abnehmender Energie gekennzeichnet. Sämtliche dieser Druckwellen können grundsätzlich ein Einspritzen bewirken. Die Folge dieser Druckwellen beschränkt jedoch die erreichbare Arbeitsfrequenz des Systems, weshalb zugunsten definierter Arbeitsbedingungen die Sekundärdruckwellen unterdrückt werden. Hierzu dient die in der Schwungleitung 5 angeordnete Dämpfungseinrichtung 4, die sämtliche Sekundärdruckwellen unterdrückt. Ein entsprechender Druckverlauf ist in Fig. 3 gezeigt, wobei deutlich wird, daß zwischen aufeinanderfolgenden Primärdruckwellen die Sekundärdruckwellen bis auf eine geringe Restwelligkeit unterdrückt werden.

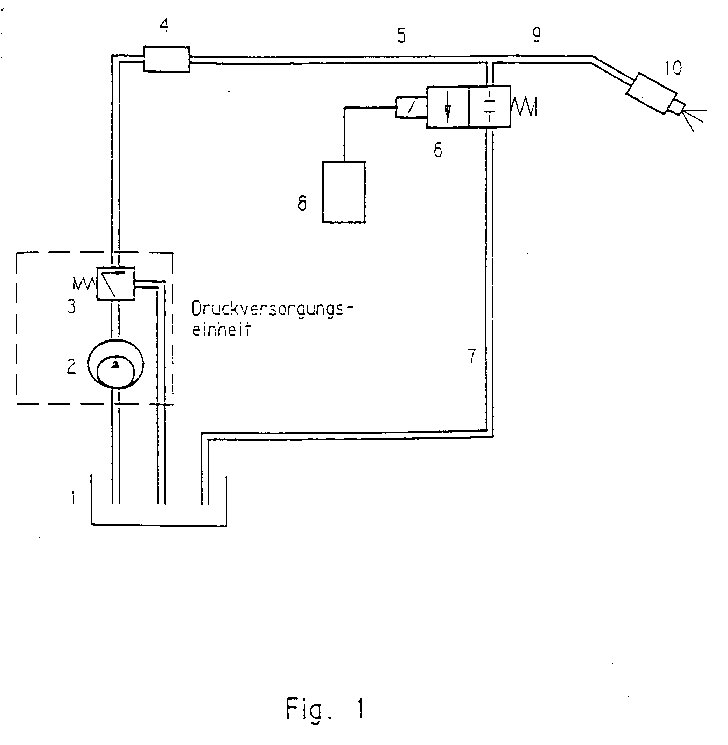

Im Vergleich zu der eingangs beschriebenen, einer elektronischen Regelung nicht zugänglichen Kraftstoff-Einspritzvorrichtung zeichnet sich die anhand der Fig. 1 bis 3 beschriebene herkömmliche Einspritzvorrichtung der gattungsgemäßen Art durch eine elektronische Steuerbarkeit aus, wobei insbesondere die Charakteristik des Einspritzdrucks grundsätzlich unabhängig von der Drehzahl des Verbrennungsmotors ist. Aufgrund des steilen Druckanstiegs und Druckabfalls in der Druckstoßeinrichtung ist ein schnelles Öffnen und Schließen der Einspritzdüse und damit ein guter Kraftstoffzerstäubungsverlauf erreichbar.

Nachteilig an der vorstehend beschriebenen bisherigen Kraftstoff-Einspritzvorrichtung ist es, daß eine Vordruckversorgung erforderlich ist, welche die für die Beschleunigung der Kraftstoff-Flüssigkeitssäule in der Schwungleitung notwendige Energie bereitstellt, und welche kontinuierlich arbeitet.

Diese kontinuierlich arbeitende Vordruckversorgung macht einen entsprechenden Aufwand für die Druckkonstanthaltung notwendig. Zu diesem Zweck wird die von der Pumpe 2 zuviel geförderte Kraftstoffmenge über das Druckregelventil 3 abgesteuert, das über eine Rücklaufleitung mit dem Vorratsbehälter 1 in Verbindung steht. Diese Druckabsteuerung führt zu einem Energieverlust, und damit neben einer Erhöhung der Kraftstofftemperatur zu Druckänderungen am Einspritzventil 6, wodurch die Genauigkeit der Einspritzung beeinträchtigt wird. Darüber hinaus benötigt das Druckregelventil 3 stets eine Mindest-Abregelmenge, um stabil arbeiten zu können, wodurch ein weiterer Energieverlust auftritt. Da der Mengenstrombedarf an der Einspritzdüse 10 von der Motordrehzahl abhängt sowie von der jeweils abzuspritzenden Menge, muß die Druckversorgungseinheit bereits im Leerlauf den Mengenstrom für den Vollastbetrieb fördern, wodurch relativ große Kraftstoffmengen bei entsprechendem Energieverlust für das Gesamtsystem über das Druckregelventil 3 abgesteuert werden müssen.

Darüber hinaus eignet sich die vorstehend beschriebene Einspritzvorrichtung mit einer kontinuierlich arbeitenden Pumpe zwar für eine Einspritzung in sog. Saugrohreinspritzmotore, nicht jedoch für eine direkte Einspritzung in den Brennraum von Ottomotoren, da hierfür ein wesentlich höheres Druckniveau erforderlich ist, wodurch die für die Pumpe ständige benötigte Leistung nicht mehr akzeptable Größen erreicht und die Pumpe darüber hinaus wegen der hohen zu verarbeitenden Drücke, Ausmaße und Gewichte erfordern würde, die insbesondere bei Fahrzeugmotoren nicht tragbar sind.

Es ist daher in der Vergangenheit der Versuch unternommen worden, diskontinuierlich arbeitende Einspritzvorrichtungen zu konstruieren, also Einspritzvorrichtungen, bei denen der für die Einspritzung benötigte Druck nicht permanent bereitgestellt werden muß, sondern erst unmittelbar vor oder zu dem Zeitpunkt erzeugt wird, zu dem er für den Einspritzvorgang benötigt wird. Eine entsprechende Vorrichtung ist beispielsweise aus der DE-PS 598 918 bekannt. Diese bekannte Vorrichtung basiert auf einem schweren Elektromagneten, der bei Erregung einen mit dem Anker verbundenen Kolben in einen Verdrängungsraum drückt, wodurch der Kraftstoff über eine Düse in den Brennraum der Brennkraftmaschine eingespritzt wird. Unmittelbar vor dem Einspritzvorgang wird ein Absperrventil geschlossen, das dann den Verdrängungsraum gegenüber einem Brennstoffeinlaß abdichtet. Dieser bekannten Vorrichtung haftet der gravierende Nachteil an, daß das zur Direkteinspritzung notwendige hohe Druckniveau die Verwendung eines sehr großen Elektromagneten benötigt, wodurch die gesamte Vorrichtung platzaufwendig und sehr träge wird, so daß sie sich für Fahrzeugmotoren weniger eignet.

In der Folge ist diese bekannte Einspritzvorrichtung deshalb mit dem Ziel kleiner Bauformen weiter entwickelt worden. Entsprechende Einspritzvorrichtungen sind aus der DD-PS 120 514 und der DD-PS 213 472 bekannt. Diese Vorrichtungen arbeiten nach dem System der Speicherung von kinetischer Energie. Zu diesem Zweck ist es vorgesehen, den Anker des Elektromagneten und damit die Kraftstoff-Flüssigkeitssäule über eine längere Strecke zu beschleunigen, bevor der Druck aufgebaut wird, der zum Abspritzen des Kraftstoffes über die Düse erforderlich ist. Diese bekannten Vorrichtungen werden auch als Pumpen-Düsenelemente bezeichnet, die nach dem Festkörper-Energiespeicherprinzip arbeiten.

Gemäß der DD-PS 120 514 ist der vom Förderkolben durchsetzte Kraftstoffförderraum in einem ersten Abschnitt mit axial angeordneten Nuten versehen, durch welche der Kraftstoff abzufließen vermag, ohne daß es zu einem wesentlichen Druckaufbau kommt, der im darauf folgenden zweiten Abschnitt des Förderraums zustandekommt, der keine Fluid-Abflußnuten aufweist.

Der Förderkolben wird daher durch den inkompressiblen Kraftstoff abgebremst, wodurch im Kraftstoff ein Druck aufgebaut wird, durch den der Widerstand des Einspritzventils überwunden wird, so daß es zum Abspritzen von Kraftstoff kommt. Nachteilig hierbei ist es, daß beim Eintauchen des Förderkolbens in den geschlossenen Abschnitt des Förderzylinders aufgrund ungünstiger Spaltbedingungen, nämlich einer großen Spaltbreite und einer kleinen Spaltlänge, große Druckverluste auftreten, die den notwendigen Druckaufbau für das Abspritzen ungünstig beeinflussen. Gemäß der DE-PS 213 472 ist es deshalb vorgeschlagen worden, im Förderzylinder einen Schlagkörper anzuordnen, so daß der Druckverlust trotz relativ großer Spaltbreiten vertretbar klein gehalten wird. Nachteilig ist hierbei jedoch, daß es durch den Schlagvorgang zu einem Verschleiß der aufeinandertreffenden Körper kommt. Weiterhin wird der Schlagkörper durch den Schlag zu Longitudinalschwingungen angeregt, die sich auf den Kraftstoff übertragen und dort als hochfrequente Druckschwingungen den Einspritzvorgang ungünstig beeinflussen.

Ein gravierender Nachteil der beiden vorstehend geschilderten Festkörper-Energiespeicher-Einspritzvorrichtungen besteht darin, daß der Einspritzverlauf des Kraftstoffes nur in begrenztem Maße steuerbar ist, sich also nur im beschränkten Umfange an die motorischen Erfordernisse anpassen läßt.

Aus der EP-A-0 174 261 ist eine Vorrichtung zum Einspritzen von Kraftstoff für Brennkraftmaschinen mit einer Einspritzdüse bekannt, bei der Kraftstoff durch eine Druckstoßeinrichtung zugeführt wird, die eine kraftstoffbeschleunigende Pumpe und eine den Kraftstoff verzögernde Einrichtung aufweist, durch deren Betätigung die kinetische Energie des beschleunigten Kraftstoffes schlagartig in eine den Kraftstoff über die Einspritzdüse abspritzende Stoßwelle umgewandelt wird, wobei die Pumpe eine intermittierende Kolbenpumpe ist. Die Rückführung des Kraftstoffs in den Vorratsbehälter erfolgt in einem offenen Kraftstoffkreislaufsystem. Die bekannte Vorrichtung ist nicht frei steuerbar. Der offene Kreislauf erfordert einen zu hohen Energieaufwand.

Die Aufgabe der Erfindung besteht darin, eine Vorrichtung zum Einspritzen von Kraftstoff für Brennkraftmaschinen der eingangs genannten Art zu schaffen, mit der mit geringer optimal ausgenutzter Energie sehr schnell, sowie entkoppelt von motorischen Vorgängen präzise steuerbar Kraftstoff eingespritzt werden kann.

Gelöst wird diese Aufgabe durch die kennzeichnenden Merkamale des Anspruchs 1. Vorteilhafte Weiterbildungen der Erfindung sind in den Unteransprüchen angegeben.

Erfindungsgemäß ist es demnach vorgesehen, den für die Einspritzung erforderlichen Kraftstoff-Volumenstrom für jeden Einspritzvorgang nur so lange bereitzustellen, wie dies in Abhängigkeit von den Motorbetriebsbedingungen zeit- und mengenbedarfsgerecht erforderlich ist. Durch die Verwendung einer intermittierend betriebenen Kraftstoffbeschleunigungspumpe entfällt die kontinuierliche Vordruckversorgung gemäß dem Stand der Technik, was der Energiebilanz der Einspritzvorrichtung zugute kommt.

Ausgehend von der anhand der Fig. 1 bis 3 vorstehenden beschriebenen Einspritzvorrichtung, bei der die Verzögerungseinrichtung ein Absperrventil ist, ist die Erfindung vorteilhafterweise dadurch realisiert, daß ein geschlossens Einspritzsystem vorgesehen ist, bei dem das Absperrventil mit dem Saugraum hinter dem Förderkolben der Kolbenpumpe verbunden ist.

Eine baulich sowie bezüglich ihrer Ansteuerung besonders einfach aufgebaute Kolbenpumpe für das geschlossene Einspritzsystem sieht es vor, daß der Förderkolben mit dem Anker des Elektromagneten gemeinsam ausgebildet ist. Kolbenstirnseiten identischer Größe erlauben hierbei eine verlustfreie Beschleunigung des Kolbens.

Ein wesentlicher Vorteil des geschlossenen Einspritzsystems besteht darin, daß aus dem Kraftstoffvorratsbehälter jeweils nur diejenige Kraftstoffmenge zur Beschleunigungspumpe gefördert werden muß, die im vorausgehenden Einspritzzyklus abgespritzt worden ist. Im Vergleich zu dem offenen Einspritzsystem ist von der Beschleunigungspumpe deshalb im geschlossenen Einspritzsystem für die Kraftstofförderung aus dem Vorratsbehälter weniger Energie aufzubringen, was der Energiebilanz des Gesamtsystems zugute kommt. Ferner nützt das geschlossene Einspritzsystem den beim schlagartigen Schließen des Absperrventils erzeugten Druckstoß im Vergleich zum offenen Einspritzsystem wesentlich besser aus. Während nämlich beim offenen Einspritzsystem, wie beispielsweise aus Fig. 1 hervorgeht, ein Teil des Druckstoßes über die Rücklaufleitung in den Kraftstoffvorratsbehälter nutzlos abgeleitet wird, wird dieser Teil des Druckstoßes beim geschlossenen Einspritzsystem gemäß der Erfindung an die Rückseite des Pumpenkolbens angelegt und damit auf den abgespritzten Kraftstoff übertragen. Auch diese Maßnahme kommt der Gesamtenergiebilanz des Einspritzsystems zugute, weshalb gegebenenfalls eine entsprechend kleinere Bauform für die Kraftstoffbeschleunigungspumpe gewählt werden kann.

Die ferner erfindungsgemäß vorgesehene Anordnung von Kolbenpumpe und Absperrventil in einem gemeinsamen Gehäuse erlaubt eine weitere drastische Reduzierung der Baugröße, sowie einen vereinfachten Aufbau der Einspritzvorrichtung, da das Absperrventil mit einem nach dem Bernoulli-Effekt gesteuerten Ventilorgan vorgesehen ist, das rein mechanisch aufgebaut ist und deshalb keiner externen Energiezuführung bedarf.

Ferner schafft die Erfindung eine Kraftstoff-Einspritzvorrichtung nach dem Festkörper Festkörper-Energiespeicherprinzip. Im Gegensatz zu dem diesbezüglichen eingangs geschilderten Stand der Technik, demnach in einem ersten Hubabschnitt einer Kolbenpumpe ein Rückströmen des Kraftstoffes stattfindet, gefolgt von einem Druckaufbau im darauffolgenden Hubabschnitt, ist es erfindungsgemäß vorgesehen, die Energie der Kolbenpumpe entlang des gesamten Förderhubes in einem geschlossenen Förderraum zu speichern, und die für ein Abspritzen über die Einspritzdüse benötigte Druckenergie dadurch aufzubauen, daß der Ablauf des verdrängten Kraftstoffes mittels eines Absperrventils schlagartig beendet wird.

Nachfolgend wird die Erfindung anhand der Zeichnung näher erläutert; in dieser zeigen:
- Fig. 1: eine schematische Darstellung einer herkömmlichen Kraftstoff-Einspritzvorrichtung,
- Fig. 2 und 3: charakteristische Druckverläufe beim Abspritzen von Kraftstoff mit der Vorrichtung von Fig. 1,

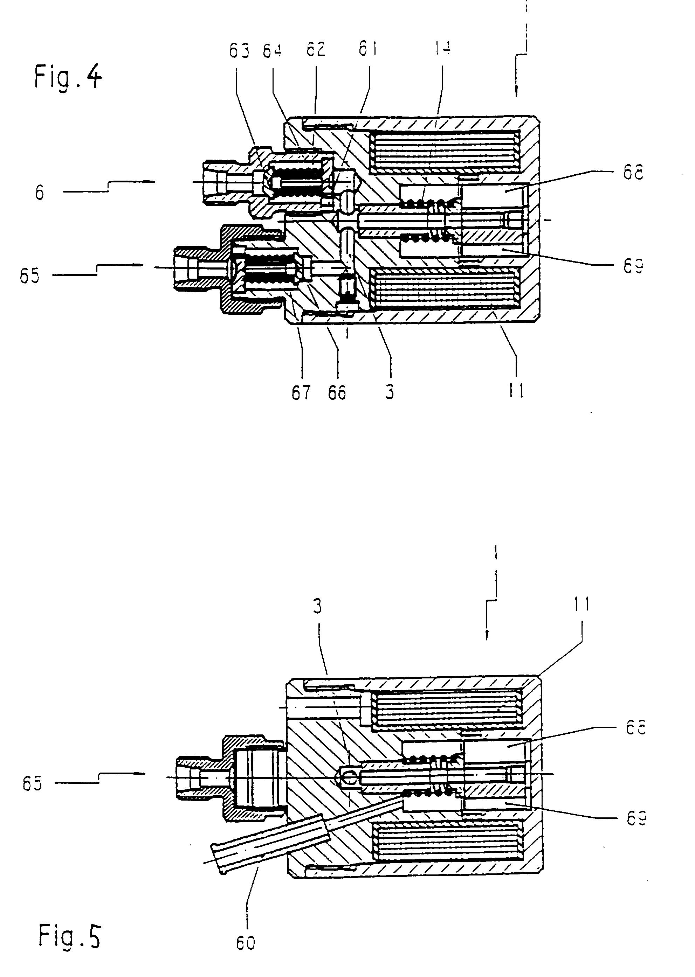

- Fig. 4: eine Ausführungsform der erfindungsgemäßen Kraftstoff-Einspritzvorrichtung mit einer baueinheitlichen Ausbildung der Kraftstoffbeschleunigungspumpe, des Absperrventils und des Rückschlagventils in der Druckleitung zur Einspritzdüse im Schnitt,
- Fig. 5: eine um 90° gedrehte Schnittdarstellung der Vorrichtung von Fig. 12,

Fig. 4 und 5 zeigen eine Ausführungsform der erfindungsgemäßen Vorrichtung, bei der das Absperrventil als Hydraulikventil ausgebildet und mit der Pumpe 1 in einem gemeinsamen Gehäuse vereinigt ist. Auch die Schwungleitung 3 ist bei dieser Variante in das gemeinsame Gehäuse integriert.

Die Funktion sowie der wesentliche Aufbau der Pumpe 1 mit elektromagnetischem Antrieb entspricht im wesentlichen den vorausgehend beschriebenen Ausführungsformen der Einspritzvorrichtung, und die Kraftstoffansaugleitung ist an ein Anschlußrohr 60 angeschlossen, das in das Pumpengehäuse eingepaßt ist (Fig. 5).

Das Absperrventil 6 ist bei diesem Ausführungsbeispiel nicht elektromagnetisch ansteuerbar ausgebildet, sondern schließt selbsttätig aufgrund des Bernoulli-Effekts bei einer bestimmten Durchflußgeschwindigkeit. Der während der Beschleunigungsphase durch die Schwungleitung 3 fließende Kraftstoff gelangt über einen Spalt 61 in den Ventilraum 62. Zwischen dem Ventilkegel 63 und dem dazugehörigen Ventilsitz ist ein schmaler Ringspalt gelassen, der sich durch entsprechende Auslegung einer Feder 64 einstellen läßt. Der Kraftstoff strömt durch diesen Ringspalt und erzeugt dort nach Bernoulli einen geringeren statischen Druck als in der Umgebung. Bei einer bestimmten Strömungsgeschwindigkeit ist der statische Druck im Ringspalt soweit abgefallen, daß der Ventilkegel 63 angezogen wird und das Absperrventil 6 schlagartig schließt, wodurch der zum Ausstoßen des Kraftstoffes über die Einspritzdüse erforderliche Druckstoß erzeugt wird, wobei die zur Einspritzdüse führende Druckleitung an den Ausgang eines Rückschlagventils 65 angeschlossen ist, das ebenfalls mit der in den Fig. 4 und 5 dargestellten Anordnung baulich vereinigt ist.

Der Ventilkegel 66 des Ventils 65 ist durch Vorspannung einer Feder 67 gegen den zugehörigen Ventilsitz gepreßt, wobei die Feder 67 so ausgelegt ist, daß das Ventil geschlossen ist, wenn der in der Schwungleitung 3 anliegende Druck unterhalb desjenigen Wertes liegt, der zu einem Ausstoß von Kraftstoff über die Einspritzdüse führt. Durch das Rückschlagventil 65 wird eine Blasenbildung in der Druckleitung zum Einspritzventil vermieden, weil durch dieses Rückschlagventil ein Einsaugen von Luft über die Einspritzdüse beim Abfallen des Abspritzdruckes und einem damit verbundenen Rücksaugen von Kraftstoff in die Druckleitung zusammen mit Luft verhindert wird.

Der Anker/Förderkolben 12 ist bei dem Ausführungsbeispiel gemäß Fig. 4/5 mit radialen Schlitzen 68 und 69 unterschiedlicher Tiefe versehen, die am gesamten Umfang des im wesentlichen zylinderförmigen Ankers angeordnet sind. Diese Schlitze verhindern die Ausbildung von Wirbelströmen bei Erregung des Solenoids und tragen damit zur Energieeinsparung bei.

## Patentansprüche

1. Vorrichtung zum Einspritzen von Kraftstoff für Brennkraftmaschinen mit einer Einspritzdüse, der Kraftstoff durch eine Druckstoßeinrichtung zugeführt wird, die eine kraftstoffbeschleunigende intermittierend betriebene Kolbenpumpe und ein den Kraftstofffluß verzögerndes Absperrventil umfaßt, durch dessen Betätigung die kinetische Energie des beschleunigten Kraftstoffs schlagartig in eine den Kraftstoff über die Einspritzdüse abspritzende Stoßwelle umgewandelt wird, **dadurch gekennzeichnet**, daß die Kolbenpumpe (1) elektromagnetisch angetrieben ist und das Absperrventil (6) ein nach dem Bernoulli-Prinzip gesteuertes an den Schwungleitungsraum vor der Kolbenpumpe (1) angeschlossenes Hydraulikventil ist, dessen Ventilorgan (63) in der Durchlaßstellung federvorgespannt (Feder 64) unter Ausbildung eines Ringspaltes von seinem Ventilsitz beabstandet ist und seine Schließstellung am Ventilsitz schlagartig einnimmt, wenn der Kraftstoff aufgrund der Pumpenförderleistung eine vorgegebene Strömungsgeschwindigkeit erreicht.

2. Vorrichtung nach Anspruch 1, **dadurch gekennzeichnet**, daß im Schwungleitungsraum vor der Kolbenpumpe (1) zur Einspritzdüse zur Verhinderung einer Gasblasenbildung durch Einsaugen von Luft über die Einspritzdüse ein Rückschlagventil (65) angeordnet ist, dessen Ventilorgan (66) durch Vorspannung einer Feder (67) gegen den zugehörigen Ventilsitz gepreßt ist, die so ausgelegt ist, daß das Ventil (65) geschlossen ist, wenn der in der Schwungleitung (3) anliegende Kraftstoffdruck unterhalb desjenigen Wertes liegt, der zum Ausstoß von Kraftstoff über die Einspritzdüse führt.

3. Vorrichtung nach Anspruch 2, **dadurch gekennzeichnet**, daß das Absperrventil (6) und das Rückschlagventil (65) zusammen mit der Pumpe (1) als bauliche Einheit in einem gemeinsamen Gehäuse angeordnet sind.

## Claims

1. Fuel injection device for internal combustion engines, with an injection nozzle to which fuel is supplied by a pressure device comprising an intermittently operating, fuel-accelerating reciprocating pump and a fuel-retarding shut-off valve, whose activation transforms the kinetic energy of the accelerated fuel abruptly to an impulse wave that ejects the fuel through the injection nozzle, characterized in that the reciprocating pump (1) is operated electromagnetically and the shut-off valve (6) is a hydraulic valve controlled in accordance with the Bernoulli principle and connected to the acceleration line space ahead of the reciprocating pump (1), whose valve cone (63), when in the open position, is lifted clear off its seating under spring pressure (spring 64) to form an annular gap, and returns abruptly to is closed position against the valve seat when the fuel reaches a predetermined flow velocity by virtue of the pumping action.

2. Device according to Claim 1, characterized in that in the acceleration line space ahead of the reciprocating pump (1) feeding the injection nozzle, to prevent gas bubble formation by drawing in air through the injection nozzle, there is a non-return valve (65) whose valve cone (66) is pressed against its valve seat by a spring (67), which is so designed that the valve (65) is closed when the fuel pressure in the acceleration line (3) is lower than the value which causes fuel to be ejected through the injection nozzle.

3. Device according to Claim 2, characterized in that the shut-off valve (6) and the non-return valve (65), together with the pump (1), are arranged as a structural unit inside a common housing.

## Revendications

1. Dispositif d'injection de carburant pour moteurs à combustion interne, comportant un gicleur d'injection auquel le carburant est apporté par un dispositif à onde de choc de pression qui comporte une pompe à piston d'accélération du carburant, fonctionnant de manière intermittente, et une vanne d'arrêt ralentissant l'écoulement de carburant, dont l'actionnement convertit brusquement l'énergie cinétique du carburant accéléré en une onde de choc expulsant le carburant par le gicleur d'injection, caractérisé en ce que la pompe à piston (1) est entraînée par des moyens électromagnétiques, et le clapet d'arrêt (6) est un clapet hydraulique raccordé à l'espace de la conduite forcée en amont de la pompe à piston (1), commandé suivant le principe de Bernoulli, dont l'organe de clapet (63), placé sous la précontrainte d'un ressort (ressort 64) dans la position de passage, est écarté de son siège de clapet en formant un interstice annulaire, et revient brusquement dans sa position fermée contre le siège de clapet lorsque, à cause du refoulement de la pompe, le carburant a atteint une vitesse d'écoulement prédéterminée.

2. Dispositif selon la revendication 1, caractérisé en ce que, dans l'espace de la conduite forcée, en amont de la pompe à piston (1), conduisant au gicleur d'injection, pour empêcher la formation de bulles de gaz par aspiration d'air par le gicleur d'injection, est disposé un clapet anti-retour (65) dont l'organe de clapet (66) est pressé contre le siège de clapet qui lui est associé, par précontrainte d'un ressort (67) qui est dimensionné de telle sorte que le clapet (65) soit fermé lorsque la pression du carburant régnant dans la conduite forcée (3) est située en dessous de la valeur qui entraîne l'expulsion du carburant par le gicleur d'injection.

3. Dispositif selon la revendication 2, caractérisé en ce que le clapet d'arrêt (6) et le clapet anti-retour (65) sont disposés en même temps que la pompe (1) dans un boîtier commun, sous la forme d'une unité intégrée.
